# EUROPÄISCHE PATENTSCHRIFT

(11) **EP 1 589 234 B1**
(45) Veröffentlichungstag und Bekanntmachung des Hinweises auf die Patenterteilung: **05.12.2007**
(21) Anmeldenummer: 04009660.4
(22) Anmeldetag: 23.04.2004
(51) Int. Cl.: F16B 5/02

(54) **Befestigungseinheit**
Fastening device
Dispositif de fixation

(43) Veröffentlichungstag der Anmeldung: 26.10.2005
(73) Patentinhaber: Adolf Würth GmbH & Co. KG, 74653 Künzelsau (DE)
(72) Erfinder:
(74) Vertreter: HOFFMANN EITLE

(56) Entgegenhaltungen:
- WO-A-02/20910
- US-A1- 2002 184 836

## Beschreibung

### Technisches Gebiet

Die vorliegende Erfindung betrifft eine Befestigungseinheit zur Befestigung von Gegenständen an einem Tragwerksabschnitt aus Beton, Mauerwerk oder dergleichen, oder zur Verbindung von Tragwerksabschnitten, unter dynamischer Beanspruchung, nach dem Oberbegriff von Anspruch 1.

### Stand der Technik

Befestigungselemente wie Dübel, Kopfbolzen, Ankerschienen, sog. Betonschrauben oder dergleichen finden im Bauwesen breite Anwendung. Sie werden dabei einerseits zur Befestigung von leichten oder schweren Gegenständen wie Rohrleitungen, Maschinenteilen, Klimaanlagen, Beleuchtungen etc. an Beton- oder Mauerwerkstragwerken verwendet, andererseits aber auch zur Verbindung von Tragwerksabschnitten aus Beton, Mauerwerk oder dergleichen eingesetzt.

Im Falle seismischer Belastungen von Tragwerken haben sich Befestigungselemente, die für statische Belastungen bemessen wurden, wiederholt als Schwachstellen erwiesen, die ein frühzeitiges Versagen im Verlaufe eines Erdbebens zeigen und hierdurch ein sukzessives Versagen ganzer Tragwerke einleiten können.

Vor diesem Hintergrund wurden zwei Hauptansätze entwickelt, mit denen ein Versagen von Befestigungen bei seismischen Belastungen mit hoher Wahrscheinlichkeit ausgeschlossen werden soll und die beispielsweise in der US-amerikanischen Norm ACI 318-02: "Building Code Requirements for Structural Concrete" zusammengefasst sind. Danach sollen Befestigungen, bei denen mit seismischen Belastungen zu rechnen ist, alternativ a) derart ausgelegt werden, dass "duktiles" Stahlversagen des Befestigungselements selbst maßgebend wird, oder b) in Verbindung mit einem Anbauteil eingesetzt werden, das "duktil" versagt, bevor die Tragfähigkeit des Befestigungselements erreicht ist.

Die Einhaltung der Bedingung a) ist bei den meisten Befestigungselementen schon deshalb nicht möglich, da diese üblicherweise aus hochfestem Stahl hergestellt sind, der somit nicht das gewünschte, duktile Stahlversagen zulässt.

Die Einhaltung der Bedingung b) bringt für den mit der Planung und Bemessung beauftragten Ingenieur aufgrund der Interaktion zwischen Befestigungselement, Anbauteil und Befestigungsgrund einen sehr hohen Berechnungsaufwand mit sich, wie er beispielsweise in Silva, J.: "Design considerations for earthquake resistant anchorages" (in Befestigungstechnik, Bewehrungstechnik, und ..., Ibidem Verlag, 2002) ansatzweise dargelegt ist. Daher findet dieses Konzept kaum baupraktische Anwendung.

Darüber hinaus hat sich gezeigt, dass selbst bei Einhaltung der Bedingung b) für eine bestimmte Belastungsrichtung ein sprödes Versagen des Befestigungselements unter tatsächlicher seismischer Beanspruchung nicht mit ausreichender Sicherheit ausgeschlossen ist.

Daher wird in der Praxis meist mit einer gegenüber dem statischen Fall pauschal abgeminderten Tragfähigkeit bemessen, obgleich diese Vorgehensweise in den einschlägigen Normen nicht zugelassen ist.

Ferner offenbart die US 2002-018 48 36 A1 eine Stahlbauverbindung einer Stütze und eines Riegels unter Einsatz von Schrauben und Verbindungswinkeln. Die Winkel sollen Verformungen absorbieren, die horizontal innerhalb der Stützen-Riegel-Ebene auftreten.

### Darstellung der Erfindung

Es ist daher Aufgabe der vorliegenden Erfindung, eine Befestigungseinheit zur Befestigung von Gegenständen an einem Tragwerksabschnitt aus Beton, Mauerwerk oder dergleichen, oder zur Verbindung von Tragwerksabschnitten bereitzustellen, die unter dynamischer Beanspruchung eine erhöhte Tragsicherheit besitzt und einfach einsetzbar ist.

Diese Aufgabe wird gemäß der vorliegenden Erfindung durch eine Befestigungseinheit mit den Merkmalen von Anspruch 1 gelöst. Vorteilhafte Weiterbildungen der Erfindung sind in den abhängigen Ansprüchen angegeben.

Der Erfindung liegt der Gedanke zugrunde, eine Befestigungseinheit aus einem bzw. mehreren Befestigungselementen und einem Anbauteil derart auszugestalten, dass ein Versagen eines oder gar mehrerer Befestigungselemente von vornherein weitgehend ausgeschlossen ist, ohne dass im jedem Einzelfall komplizierte und umfangreiche Untersuchungen erforderlich sind. Zu diesem Zweck ist erfindungsgemäß vorgesehen, dass das Anbauteil derart bemessen ist, dass bei jeweils einzelner oder kombinierter Belastung in mindestens zwei Belastungsrichtungen die elastische Tragfähigkeit des Anbauteils zumindest abschnittsweise überschritten wird, bevor die Maximaltragfähigkeit eines Befestigungselements oder aller Befestigungselemente erreicht ist, wobei die Belastungsrichtungen eine erste Belastungsrichtung, die sich im wesentlichen senkrecht zu der Achse des ersten Befestigungselements erstreckt, und eine zweite Belastungsrichtung, die sich im wesentlichen senkrecht zu der ersten Belastungsrichtung und/oder der Achse des ersten Befestigungselements erstreckt, aufweisen.

Hierdurch wird erreicht, dass die erfindungsgemäße Befestigungseinheit sämtliche in der durch die mindestens zwei Belastungsrichtungen definierten Ebene auftretenden, dynamischen Belastungen durch Verformung absorbieren kann, so dass eine Überschreitung der Tragfähigkeit der Befestigungselemente vermieden wird. Dies ist insbesondere bei Erdbebenbelastungen von Vorteil, da hierbei meist mehrere Belastungsrichtungen vorherrschen, die überwiegend in einer gemeinsamen - häufig horizontalen - Ebene liegen.

Diese vorteilhafte Wirkung wird bei bisher bekannten Anbauteilen, wie beispielsweise L-förmigen Winkeln, gerade nicht erreicht, da eine ausreichende Verformbarkeit in nur einer Richtung gegeben ist, was die Befestigungseinheit in jeder anderen Richtung anfällig für sprödes Versagen unter dynamischer Belastung macht.

Gleichzeitig beseitigt die erfindungsgemäße Befestigungseinheit die Notwendigkeit, dass in jedem Einzelfall eine komplizierte und aufwändige Bemessung für dynamische Belastungen durchgeführt werden muss, und beseitigt hierdurch auch erhebliche Fehlerquellen, die bei der Einzelfallbemessung unvermeidlich sind. Dabei ist auch zu beachten, dass Befestigungseinheiten für seismische Anwendungen häufig gerade in sicherheitstechnisch hoch relevanten Einrichtungen zum Einsatz kommen, wie (Kern-)Kraftwerken, öffentlichen Gebäuden und dergleichen.

Um den Sicherheitsabstand gegenüber einem spröden Versagen eines Befestigungselements weiter zu erhöhen und größere Verformungen des Anbauteils zu ermöglichen, ist gemäß einer Weiterbildung der Erfindung vorgesehen, dass das Anbauteil derart bemessen ist, dass bei jeweils einzelner oder kombinierter Belastung in mindestens zwei Belastungsrichtungen die elastische Tragfähigkeit des Anbauteils zumindest abschnittsweise überschritten wird, bevor die elastische Tragfähigkeit eines Befestigungselements oder aller Befestigungselemente erreicht ist. Auf diese Weise wird sichergestellt, dass das mindestens eine Befestigungselement im Falle dynamischer Beanspruchung keine nicht-elastischen Verformungen erfährt, sodass ein Austauschen oder Sanieren des mindestens einen Befestigungselements nach Durchlaufen der dynamischen Belastung nicht erforderlich ist. Dementsprechend genügt es regelmäßig, lediglich ein im Zuge dynamischer Beanspruchungen möglicherweise stark verformtes Anbauteil zu ersetzen, was kostengünstig und zügig durchgeführt werden kann.

Die vorstehend verwendeten Begriffe "elastische Tragfähigkeit" bzw. "Maximaltragfähigkeit" beziehen sich auf Punkte in der Last-Verschiebungskurve eines Befestigungselements bzw. eines Anbauteils, das in einer bestimmten Richtung belastet wird. Dabei beschreibt die elastische Tragfähigkeit den Übergang der Last-Verschiebungskurve von einem linearen zu einem nicht linearen Verlauf, während die Maximaltragfähigkeit denjenigen Punkt beschreibt, an welchem die höchste Last erreicht wird. Dabei ist zu beachten, dass bei duktilen Bauteilen, wie beispielsweise Anbauteilen aus Stahl, das Anbauteil nach Überschreiten der elastischen Tragfähigkeit je nach Duktilität des verwendeten Materials zu erheblichen zusätzlichen Verformungen bis zum Erreichen der Bruchdehnung in der Lage sein kann. Im Rahmen der vorliegenden Erfindung ist es daher bevorzugt, dass das Anbauteil zumindest abschnittsweise aus einem duktilen Werkstoff besteht, d. h. einem Werkstoff, der nach Überschreiten seiner elastischen Tragfähigkeit erhebliche weitere Verformungen zulässt. Auf diese Weise kann ein vollständiger Bruch der Befestigungseinheit, der beispielsweise zu einem Herunterfallen befestigter Gegenstände führen kann, vermieden werden.

Im Hinblick auf die Belastungen, welche auf die erfindungsgemäße Befestigungseinheit unter dynamischen Beanspruchungen einwirken, ist ferner zu berücksichtigen, dass neben den dynamischen Beanspruchungen selbst, die beispielsweise aus Erdbeben herrühren können, häufig auch erhebliche statische Lasten wirken, beispielsweise das Eigengewicht eines befestigten Gegenstandes. Diese statischen Lasten überlagern sich mit den dynamischen Beanspruchungen und können in vielen Fällen in einer Richtung senkrecht zu den dynamischen Belastungen wirken, beispielsweise bei einer Überlagerung einer vertikalen, statischen Belastung aus Eigengewicht und horizontalen Erdbebenbeanspruchungen. Um auch in diesen Fällen eine erhöhte Tragsicherheit bereitzustellen, ist gemäß einer Weiterbildung der vorliegenden Erfindung vorgesehen, dass die Anzahl der Belastungsrichtungen, in denen die oben angegebenen Bedingungen erfüllt sind, drei beträgt.

Die Orientierung der einzelnen Belastungsrichtungen lässt sich vorab auf vielfältige Weise auf die jeweilige Kombination von Anbauteil, Befestigungselementen, Anker und ggf. Einbausituation abstimmen. Darüber hinaus ist es erfindungsgemäß besonders bevorzugt, dass die Belastungsrichtungen ferner eine dritte Belastungsrichtung einschließen, die sich senkrecht zu der ersten und/oder zweiten Belastungsrichtung und bevorzugt im wesentlichen parallel zu der Achse des ersten Befestigungselements erstreckt. Auf diese Weise ist auch bei kombinierter, Zug- und Querzugbeanspruchung des mindestens einen Befestigungselements ein Versagen desselben ausgeschlossen.

Das erfindungsgemäße Anbauteil kann grundsätzlich mit einer beliebigen Anzahl von Befestigungselementen kombiniert werden, beispielsweise auch mit einem einzelnen Befestigungselement. Zur Aufnahme dynamischer Beanspruchungen und zur Vermeidung einer Verdrehung des Anbauteils ist es jedoch erfindungsgemäß bevorzugt, dass mindestens zwei Befestigungselemente vorgesehen sind. Gemäß einer Weiterbildung der vorliegenden Erfindung ist ferner bevorzugt, dass das Anbauteil mindestens zwei Durchgangsöffnungen aufweist. In diesem Falle weisen die Belastungsrichtungen bevorzugt eine erste Belastungsrichtung, die sich im wesentlichen senkrecht zu der Achse des ersten Befestigungselements erstreckt, und eine zweite Belastungsrichtung, die sich im wesentlichen in der Richtung, in der mindestens zwei Durchgangsöffnungen nebeneinander angeordnet sind, und/oder im wesentlichen senkrecht zu der ersten Belastungsrichtung erstreckt, auf. Die vorliegende Erfindung stellt somit ein Anbauteil bereit, bei welchem selbst in der Richtung, in welcher bekannte Anbauteile eine unerwünscht hohe Steifigkeit besitzen, die gewünschte Duktilität gewährleistet und somit ein vorzeitiges Versagen eines Befestigungselements ausgeschlossen ist.

Um die vorstehend genannten Bedingungen zu erfüllen, kann das Anbauteil auf vielfältige Art und Weise ausgestaltet sein. Gemäß einer Weiterbildung der vorliegenden Erfindung ist es jedoch bevorzugt, dass das Anbauteil einen ersten Abschnitt zur Verbindung mit dem mindestens einen Befestigungselement, einen zweiten Abschnitt zur Verbindung mit mindestens einem zu befestigenden Bauteil, und einen dritten Abschnitt, welcher den ersten und den zweiten Abschnitt verbindet, aufweist, wobei die elastische Tragfähigkeit des dritten Abschnitts in mindestens einer Belastungsrichtung geringer ist als diejenige des ersten und/oder zweiten Abschnitts. Hierdurch ergibt sich ein variabel ausgestaltbares Anbauteil, dessen Abschnitte genau auf die jeweiligen Zwecke abgestimmt werden können, für welche sie vorgesehen sind. So erlaubt es insbesondere der dritte Abschnitt, in einer beliebigen Belastungsrichtung die Tragfähigkeit des Anbauteils so abzustimmen, dass eine Überbelastung des mindestens einen Befestigungselements ausgeschlossen ist, was bei bekannten Anbauteilen nicht möglich war. Dabei ist zu beachten, dass der dritte Abschnitt einstückig mit dem ersten und/oder zweiten Abschnitt gebildet sein kann, oder auch ein separates, gegebenenfalls mehrteiliges Element sein kann, welches den ersten und den zweiten Abschnitt verbindet. Auch kommen für den dritten Abschnitt die verschiedenartigsten Materialien und Geometrien in Frage, solange sie die gewünschte Funktion erfüllen. Auf besonders einfache Weise lässt sich der dritte Abschnitt erfindungsgemäß ausgestalten, indem er einen geringeren Querschnitt aufweist als der erste und/oder zweite Abschnitt.

Gemäß einer weiteren Zielrichtung der vorliegenden Erfindung ist vorgesehen, dass der erste Abschnitt des Anbauteils eine Einrichtung zur Verminderung von Schlupf, insbesondere Lochspiel, gegenüber dem mindestens einen Befestigungselement aufweist. Auf diese Weise wird sichergestellt, dass die tatsächlich Tragfähigkeit des mindestens einen Befestigungselements bzw. aller Befestigungselemente nicht durch unerwünschten Schlupf vermindert wird und hierdurch ein frühzeitiges Versagen des mindestens einen Befestigungselements auftritt. Dabei ist zu beachten, dass zwischen dem Anbauteil und dem mindestens einen Befestigungselement der erfindungsgemäßen Befestigungseinheit üblicherweise ein gewisses Lochspiel vorhanden ist, um den Einbau der einzelnen Bauteile zu ermöglichen, bevor diese dauerhaft miteinander verspannt werden. Trotz der Verspannungen ist es bei dynamischer Beanspruchung insbesondere senkrecht zur Achse des mindestens einen Befestigungselements möglich, dass die Kontakt- bzw. Reibungskräfte überwunden werden und daher ein Schlupf bzw. eine Relativverschiebung zwischen Anbauteil und Befestigungselement auftritt. Diese Relativverschiebung äußert sich durch ein typisches Anschlagen des Anbauteils an dem mindestens einen Befestigungselement und einem Verbiegen desselben, was insbesondere bei einer höheren Anzahl von Zyklen zu einem frühzeitigen Ermüdungsbruch führen kann. Ein derartiges Phänomen kann allerdings durch die erfindungsgemäße Einrichtung zur Verminderung von Schlupf ausgeschlossen werden. Als derartige Einrichtung sind verschiedene Maßnahmen denkbar, beispielsweise das Einsetzen von Hülsen, Keilen oder dergleichen zwischen Anbauteil und dem mindestens einen Befestigungselement, oder auch das Vergießen der Spalte zwischen diesen Bauteilen mit hochfestem Mörtel oder dergleichen.

Gemäß einer weiteren Zielrichtung stellt die vorliegende Erfindung ein Anbauteil zur Befestigung von Gegenständen an einem Tragwerksabschnitt aus Beton, Mauerwerk oder dergleichen, oder zur Verbindung von Tragwerksabschnitten, unter dynamischer Beanspruchung bereit, das dazu vorgesehen ist, mittels mindestens eines in dem Tragwerksabschnitt verankerbaren Befestigungselement mit dem Tragwerkabschnitt verbunden zu werden, und das derart bemessen ist, dass bei jeweils einzelner oder kombinierter Belastung in mindestens zwei Belastungsrichtungen die elastische Tragfähigkeit des Anbauteils zumindest abschnittsweise überschritten wird, bevor die Maximaltragfähigkeit eines Befestigungselements oder aller Befestigungselemente erreicht ist. Mit diesem erfindungsgemäßen Anbauteil lassen sich die zuvor genannten Vorteile erzielen, wenn es mit mindestens einem Befestigungselement kombiniert und eingesetzt wird, für welches es erfindungsgemäß ausgelegt ist.

### Kurze Beschreibung der Zeichnungen

- Fig. 1: zeigt schematisch eine Perspektivansicht einer ersten Ausführungsform des erfindungsgemäßen Anbauteils;
- Fig. 2: zeigt schematisch eine seitliche Schnittansicht einer ersten Ausführungsform der erfindungsgemäßen Befestigungseinheit, wobei der Schnitt entlang der Linie II-II in Fig. 1 geführt ist;
- Fig. 3: zeigt schematisch verschiedene Ansichten einer zweiten Ausführungsform des erfindungsgemäßen Anbauteils;

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

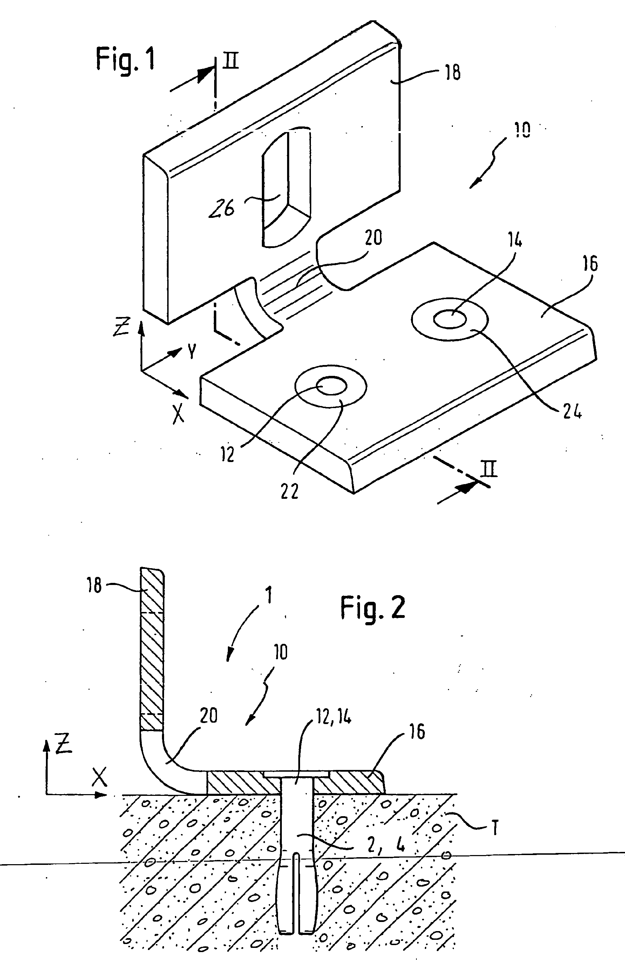

Fig. 1 zeigt schematisch eine Perspektivansicht eines Anbauteils 10 gemäß einer ersten Ausführungsform der vorliegenden Erfindung. Das Anbauteil 10 ist allgemein L-förmig ausgebildet und besitzt einen ersten, plattenartigen Abschnitt 16, einen zweiten, plattenartigen Abschnitt 18 sowie einen diese verbindenden Steg 20. Das Anbauteil besteht in der vorliegenden Ausführungsform aus Stahl, kann jedoch auch aus anderen geeigneten Materialen bestehen, wie beispielsweise Aluminium. Dabei sind duktile Materialen bevorzugt.

Der erste Abschnitt 16 des Anbauteils 10 umfasst in der vorliegenden Ausführungsform zwei Durchgangsbohrungen 12, 14, die zum Hindurchführen von Befestigungsmitteln, wie beispielsweise Dübeln, Betonschrauben oder dergleichen dienen. Es ist jedoch selbstverständlich, dass auch nur eine Durchgangsbohrung bzw. mehrere Durchgangsbohrungen für Befestigungsmittel vorgesehen sein können. So ist in dem zweiten Abschnitt 18 des Anbauteils 10 eine einzelne, langlochartige Durchgangsbohrung 26 vorgesehen, die ebenfalls zum Hindurchführen von Befestigungsmitteln dient.

Der Einsatz des erfindungsgemäßen Anbauteils 10 wird anhand von Fig. 2 ersichtlich, die schematisch eine seitliche Schnittansicht des in Fig. 1 gezeigten Anbauteils zeigt, wobei der Schnitt entlang der Linie II-II in Fig. 1 geführt ist. In Fig. 2 ist das Anbauteil 10 mittels zweier Dübel 2, 4 an einem Tragwerksabschnitt T befestigt und bildet mit diesen eine erfindungsgemäße Befestigungseinheit 1. Der Tragwerksabschnitt T kann beispielsweise aus Stahlbeton oder einem anderen geeigneten Tragwerksmaterial bestehen, es kann sich hierbei auch um eine Verbundkonstruktion handeln.

Im Bereich des plattenförmigen, zweiten Abschnitts 18 kann ein beliebiger Gegenstand wie Rohrleitungen, Maschinenteile, Klimaanlagen, Beleuchtungen und dergleichen befestigt werden, beispielsweise indem herkömmliche Schrauben oder Bolzen durch die Durchgangsöffnung 26 hindurchgeführt und mit dem Anbauteil 10 verspannt werden. Alternativ ist es ebenso möglich, an dem zweiten Abschnitt 18 einen weiteren Tragwerksabschnitt zu befestigen, wie beispielsweise Fertigteile oder Halbfertigteile für Wände, Stützen und dergleichen.

Wie in Fig. 1 zu erkennen ist, besitzt der Steg 20 des Anbauteils 10 einen deutlich geringeren Querschnitt als die plattenförmigen Abschnitte 16 und 18, so dass der Steg 20 in der vorliegenden Ausführungsform eine deutlich geringere Tragfähigkeit und Steifigkeit besitzt als die Abschnitte 16 und 18. Hierdurch wird insbesondere vermieden, dass das Anbauteil 10 beispielsweise bei Belastungen in der in Fig. 1 angegebenen Y-Richtung eine übermäßige Steifigkeit und Festigkeit besitzt, die keine ausreichende Verformungsfähigkeit bei dynamischen Beanspruchungen ermöglichen würden. Dabei ist zu beachten, dass die plattenförmigen Abschnitte 16 und 18 häufig aufgrund konstruktiver Vorgaben, wie z. B. Mindestabständen der Befestigungsmittel oder Ausgestaltung der zu befestigenden Gegenstände, große Abmessungen besitzen, die für den Einsatz unter dynamischer, insbesondere seismischer Beanspruchung zu steif und daher nicht geeignet sind.

Durch die vorliegende Erfindung wird hingegen ein Anbauteil 10 bereitgestellt, das beliebige Anschlussgeometrien der zu befestigenden Bauteile bzw. Tragwerke mit einem Tragverhalten vereint, das für dynamische, insbesondere seismische Beanspruchungen geeignet ist. So ist das Tragverhalten des Anbauteils 10 erfindungsgemäß derart auf die Befestigungsmittel 2 und 4 ausgelegt, dass die elastische Tragfähigkeit des Anbauteils 10 im Bereich des Steges 20 in zumindest zwei Belastungsrichtungen geringer ist als die elastische Tragfähigkeit der durch die Befestigungselemente 2 und 4 gebildeten Gruppe. Als elastische Tragfähigkeit des Steges 20 wird dabei diejenige Belastung bezeichnet, bei welcher das Material des Steges 20 zumindest abschnittsweise die Streckgrenze erreicht.

Die verminderte Tragfähigkeit des Steges 20 ist in der vorliegenden Ausführungsform durch eine verminderte Querschnittsfläche erzielt. Es ist jedoch auch zu beachten, dass im Rahmen der vorliegenden Erfindung auch andere Maßnahmen zur Verminderung der Tragfähigkeit des Abschnitts 20 möglich sind, wie beispielsweise der Einsatz eines anderen Materials oder dergleichen. Ferner kann der Abschnitt 20, welcher die plattenförmigen Abschnitte 16 und 18 verbindet, auch mehrteilig bzw. mehrgliedrig ausgeführt sein.

Um möglichen Schlupf zwischen dem Anbauteil 10 und den Befestigungsmitteln 2 und 4 zu vermeiden oder gering zu halten, sind in der vorliegenden Ausführungsform innerhalb der Durchgangsbohrungen 12 und 14 hülsenartige Elemente 22 und 24 vorgesehen, welche die Befestigungsmittel 2 und 4 im eingebauten Zustand umgeben. Hierdurch können zusätzliche dynamische Beanspruchungen, die durch das zyklische Auftreten von Schlupf entstehen können, beseitigt werden. Es ist jedoch selbstverständlich, dass im Rahmen der vorliegenden Erfindung auch mit anderen Elementen bzw. ohne solche Elemente gearbeitet werden kann.

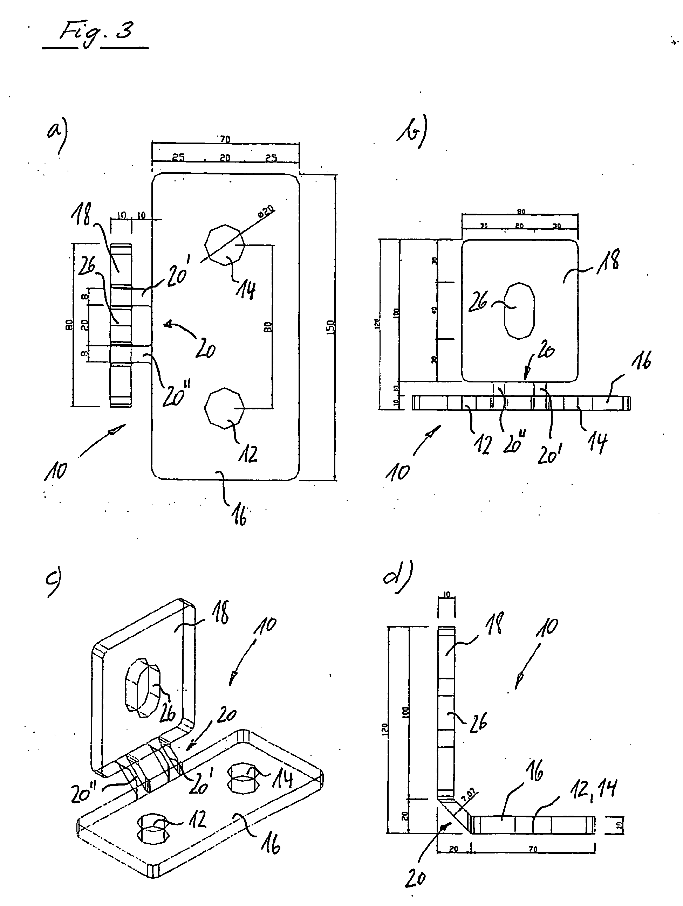

Fig. 3 zeigt schematisch verschiedene Ansichten einer zweiten Ausführungsform des erfindungsgemäßen Anbauteils. Dabei sind in Fig. 3 rein beispielhafte Abmessungen in mm für das Anbauteil 10 angegeben, die in keiner Weise beschränkend für die vorliegende Erfindung sind. Das in Fig. 3 gezeigte Anbauteil 10 unterscheidet sich von dem in Fig. 1 und 2 gezeigten Anbauteil hauptsächlich dadurch, dass der dritte Abschnitt 20 durch zwei voneinander beabstandete Teilabschnitte 20', 20" gebildet ist. Durch diese Maßnahme kann die Tragfähigkeit des Anbauteils 10 noch besser auf die Tragfähigkeit, Anzahl, Anordnung etc. der Befestigungselemente und die sonstigen Randbedingungen abgestimmt werden. Dabei sind selbstverständlich auch mehr als zwei Teilabschnitte sowie andersartige Ausgestaltungen und Anordnungen der Teilabschnitte im Rahmen der vorliegenden Erfindung möglich.

Das in Fig. 3 gezeigte Anbauteil 10 besteht in der vorliegenden Ausführungsform aus Stahl ST 37-2 und besitzt somit einen Elastizitätsmodul E = 210 000 MPa sowie eine charakteristische Streckgrenze (Fließbeginn) von f_{yk} = 235 MPa. Das Anbauteil 10 ist geeignet, in der vorliegenden Ausführungsform beispielsweise mit zwei Dübeln vom Typ Würth W-HAZ-B der Größe M12 (Stahlgüte 8.8) als erfindungsgemäße Befestigungseinheit 1 eingesetzt zu werden. Für diesen Dübel werden bei einer Verankerungstiefe von 80 mm und einer Betonfestigkeitsklasse C20/25 gemäß dem sogenannten CC-Verfahren (vgl. Eligehausen, Mallée: Befestigungstechnik im Beton- und Mauerwerksbau, Verlag Ernst & Sohn, Berlin, 2000) die in Tabelle 1 angegebenen Bemessungswerte der Zugtragfähigkeit sowie Querzugtragfähigkeiten angesetzt.

Es ist jedoch zu beachten, dass das in Fig. 3 gezeigte Anbauteil 10 auch mit anderen Befestigungselementen eine erfindungsgemäße Befestigungseinheit bilden kann, solange die in den Patentansprüchen angegebenen Bedingungen und Merkmale erfüllt sind. Dies ergibt sich auch aus einem Grundgedanken der Erfindung, wonach nicht ein Anbauteil auf die Kombination mit einem bestimmten Befestigungselement beschränkt ist, sondern bestimmte, erfindungsgemäße Kombinationen von Anbauteile und Befestigungselementen stets dafür sorgen, dass ein (sprödes) Versagen der Befestigungselemente durch die Ausgestaltung des Anbauteils ausgeschlossen ist.

Zur Überprüfung des Tragverhaltens der Befestigungseinheit aus dem in Fig. 3 gezeigten Anbauteil sowie zwei Dübeln vom Typ Würth W-HAZ-B mit den oben angegebenen Eigenschaften haben die Erfinder eine nichtlineare Computerberechnung auf der Grundlage der Methode der Finiten-Elemente durchgeführt. Im Rahmen der Berechnung wurde das Anbauteil 10 im Bereich der Durchgangsöffnungen 12, 14 unverschieblich gehalten, und der zweite Abschnitt 18 wurde im Bereich seiner Durchgangsöffnung mit einer Belastung jeweils in X-, Y- und Z-Richtung beaufschlagt. Die Belastung wurde gesteigert, bis zumindest an einem Ort des Anbauteils 10 die charakteristische Streckgrenze des Materials überschritten und schließlich die Bruchdehnung des Materials erreicht wurde. Dabei lag der Ort des Fließbeginns stets in dem dritten Abschnitt 20 des Anbauteils 10.

Wesentliche Ergebnisse der Computerberechnung sind in Tabelle 1 getrennt für die einzelnen Belastungsrichtungen X, Y und Z angegeben. Gegenübergestellt sind stets die auf das Anbauteil aufgebrachte Belastung bei Fließbeginn, die dabei auftretende Beanspruchung der Dübelgruppe und der zugehörige Bemessungswert der Tragfähigkeit der Dübelgruppe. Tabelle 1 zeigt deutlich, dass die Zug- bzw. Querzugbeanspruchung der Dübelgruppe in allen Belastungsrichtungen (X, Y, Z) bei Fließbeginn des Anbauteils geringer ist als der zugehörige Bemessungswert der Tragfähigkeit der Dübelgruppe. Die Differenz zwischen Belastung bei Fließbeginn und Zugbeanspruchung der Dübelgruppe in Z-Richtung rührt daher, dass sich das Anbauteil bei Zugbeanspruchung am Verankerungsgrund abstützt, was zu einer zusätzlichen Belastung (hier in Höhe von 3 kN) der Dübelgruppe führt

**Tabelle 1**

| Belastung in Z-Richtung | |
|---|---|
| Belastung bei Fließbeginn des Anbauteils R_{A} | 15 kN |
| Zugbeanspruchung der Dübelgruppe | 18 kN |
| Bemessungswert der Zugtragfähigkeit der Dübelgruppe R_{z} | 20 kN 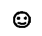 |

| Belastung in Y-Richtung | |
|---|---|
| Belastung bei Fließbeginn des Anbauteils R_{A} | 5 kN |
| Querzugbeanspruchung der Dübelgruppe | 5 kN |
| Bemessungswert der Querzugtragfähigkeit der Dübelgruppe R_{Y} | 33 kN 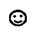 |

| Belastung in X-Richtung | |
|---|---|
| Belastung bei Fließbeginn des Anbauteils R_{A} | 17 kN |
| Querzugbeanspruchung der Dübelgruppe | 17 kN |
| Bemessungswert der Querzugtragfähigkeit der Dübelgruppe R_{X} | 33 kN 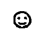 |

Die in Tabelle 1 angegebenen Berechnungsergebnisse veranschaulichen, dass ein Versagen der Dübelgruppe in allen Belastungsrichtungen X, Y und Z wirksam verhindert wird und kurzfristige, dynamische Beanspruchungen durch eine Verformung des Anbauteils 10 aufgenommen werden können. Darüber hinaus zeigte die Berechnung, dass selbst bei einem Bruch des erfindungsgemäßen Anbauteils 10 im Bereich des dritten Abschnitts 20 in allen Belastungsrichtungen die tatsächliche, mittlere Tragfähigkeit der zugehörigen Dübelgruppe (ebenfalls berechnet nach dem CC-Verfahren) noch nicht erreicht gewesen ist.

Insgesamt ermöglicht das erfindungsgemäßeAnbauteil bzw. die erfindungsgemäße Befestigungseinheit, dass die Bemessung einer Befestigung für dynamische, insbesondere seismische Beanspruchungen auf einfache und gleichzeitig sichere Weise vorgenommen werden kann. Das Trag- und Verformungsverhalten des Anbauteils ist erfindungsgemäß bereits derart auf das mindestens eine Befestigungsmittel abgestimmt, dass der planende Ingenieur keine nichtlinearen und/oder dynamischen Analysen ausführen muss, sondern die Befestigung prinzipiell wie bei statischen Lastfällen vornehmen kann.

## Patentansprüche

1. Befestigungseinheit (1) zur Befestigung von Gegenständen an einem Tragwerksabschnitt (T) aus Beton, Mauerwerk oder dergleichen, oder zur Verbindung von Tragwerksabschnitten (T), unter dynamischer Beanspruchung, mit
mindestens einem Befestigungselement (2, 4), das in dem Tragwerksabschnitt (T) verankerbar ist, und
einem Anbauteil (10), das dazu vorgesehen ist, mittels des mindestens einen Befestigungselements (2, 4) mit dem Tragwerksabschnitt (T) verbunden zu werden,
**dadurch gekennzeichnet, dass** das Anbauteil (10) derart bemessen ist, dass bei jeweils einzelner oder kombinierter Belastung in mindestens zwei Belastungsrichtungen (X, Y, Z) die elastische Tragfähigkeit (R_{A}) des Anbauteils zumindest abschnittsweise überschritten wird, bevor die Maximaltragfähigkeit eines Befestigungselements oder aller Befestigungselemente (2, 4) erreicht ist, wobei die Belastungsrichtungen eine erste Belastungsrichtung (X), die sich im wesentlichen senkrecht zu der Achse des ersten Befestigungselements (2) erstreckt, und eine zweite Belastungsrichtung (Y), die sich im wesentlichen senkrecht zu der ersten Belastungsrichtung (X) und/oder der Achse des ersten Befestigungselements (2) erstreckt, aufweisen.

2. Befestigungseinheit nach Anspruch 1, **dadurch gekennzeichnet, dass** das Anbauteil (10) derart bemessen ist, dass bei jeweils einzelner oder kombinierter Belastung in mindestens zwei Belastungsrichtungen (X, Y, Z) die elastische Tragfähigkeit (R_{A}) des Anbauteils zumindest abschnittsweise überschritten wird, bevor die elastische Tragfähigkeit (R_{X}, R_{Y}, R_{Z}) eines Befestigungselements oder aller Befestigungselemente (2, 4) erreicht ist.

3. Befestigungseinheit nach Anspruch 1 oder 2, **dadurch gekennzeichnet, dass** das Anbauteil (10) derart bemessen ist, dass bei jeweils einzelner oder kombinierter Belastung in drei Belastungsrichtungen (X, Y, Z) die elastische Tragfähigkeit (R_{A}) des Anbauteils zumindest abschnittsweise überschritten wird, bevor die Maximaltragfähigkeit eines Befestigungselements oder aller Befestigungselemente (2, 4) erreicht ist.

4. Befestigungseinheit nach einem der vorhergehenden Ansprüche, **dadurch gekennzeichnet, dass** die Belastungsrichtungen ferner eine dritte Belastungsrichtung (Z) einschließen, die sich senkrecht zu der ersten (X) und/oder zweiten (Y) Belastungsrichtung und bevorzugt im wesentlichen parallel zu der Achse des ersten Befestigungselements (2) erstreckt.

5. Befestigungseinheit nach einem der vorhergehenden Ansprüche, **dadurch gekennzeichnet, dass** das Anbauteil (10) mindestens zwei Durchgangsöffnungen (12, 14) aufweist, wobei die Belastungsrichtungen eine erste Belastungsrichtung (X), die sich im wesentlichen senkrecht zu der Achse des ersten Befestigungselements (2) erstreckt, und eine zweite Belastungsrichtung (Y), die sich im wesentlichen in der Richtung, in der mindestens zwei Durchgangsöffnungen (12, 14) nebeneinander angeordnet sind, und/oder im wesentlichen senkrecht zu der ersten Belastungsrichtung (X) erstreckt, aufweisen.

6. Befestigungseinheit nach einem der vorhergehenden Ansprüche, **dadurch gekennzeichnet, dass** das Anbauteil (10) einen ersten Abschnitt (16) zur Verbindung mit dem mindestens einen Befestigungselement (2, 4), einen zweiten Abschnitt (18) zur Verbindung mit mindestens einem zu befestigenden Bauteil, und einen dritten Abschnitt (20), welcher den ersten und den zweiten Abschnitt verbindet, aufweist, wobei die elastische Tragfähigkeit des dritten Abschnitts (20) in mindestens einer Belastungsrichtung geringer ist als diejenige des ersten und/oder zweiten Abschnitts (16, 18).

7. Befestigungseinheit nach Anspruch 6, **dadurch gekennzeichnet, dass** der dritte Abschnitt (20) einen geringeren Querschnitt aufweist als der erste und/oder zweite Abschnitt (16, 18).

8. Befestigungseinheit nach Anspruch 6 oder 7, **dadurch gekennzeichnet, dass** der dritte Abschnitt (20) durch mehrere Teilabschnitte (20', 20'') gebildet ist.

9. Befestigungseinheit nach einem der vorhergehenden Ansprüche, **dadurch gekennzeichnet, dass** das Anbauteil (10) zumindest abschnittsweise, insbesondere der dritte Abschnitt (20), aus einem duktilen Werkstoff besteht.

10. Befestigungseinheit nach einem der vorhergehenden Ansprüche, **dadurch gekennzeichnet, dass** der erste Abschnitt (16) des Anbauteils (10) eine Einrichtung (22, 24) zur Verminderung von Schlupf gegenüber dem mindestens einen Befestigungselement (2, 4) aufweist.

11. Anbauteil (10) für eine Befestigungseinheit (1) nach einem der Ansprüche 1 bis 10.

12. Verbindung eines Tragwerksabschnitts (T) mit mindestens einem weiteren Tragwerksabschnitt oder Gegenstand, umfassend eine Befestigungseinheit (1) nach einem der Ansprüche 1 bis 10, **dadurch gekennzeichnet, dass** sich zumindest zwei der Belastungsrichtungen (X, Y) im Wesentlichen horizontal erstrecken.

## Claims

1. Fastening unit (1) for fastening objects to a supporting framework section (T) made from concrete, brickwork or the like, or for connecting supporting framework sections (T), with dynamic loading, to
at least one fastening element (2, 4), which can be anchored in the supporting framework section (T), and
an attachment part (10) which is thus provided to be connected to the supporting framework section (T) by means of the at least one fastening element (2, 4),
**characterised in that** the attachment part (10) has dimensions such that for in each case individual or combined loading in at least two loading directions (X, Y, Z), the resilient load-bearing capacity (R_{A}) of the attachment part is exceeded at least in sections, before the maximum load-bearing capacity of a fastening element or all fastening elements (2, 4) is reached, wherein the loading directions have a first loading direction (X), which extends essentially vertically to the axis of the first fastening element (2), and a second loading direction (Y), which extends essentially vertically to the first loading direction (X) and/or the axis of the first fastening element (2).

2. Fastening unit according to claim 1, **characterised in that** the attachment part (10) has dimensions such that for in each case individual or combined loading in at least two loading directions (X, Y, Z), the resilient load-bearing capacity (R_{A}) of the attachment part is exceeded at least in sections, before the resilient load-bearing capacity (R_{X}, R_{Y}, R_{Z}) of a fastening element or all fastening elements (2, 4) is reached.

3. Fastening unit according to claim 1 or 2, **characterised in that** the attachment part (10) has dimensions such that for in each case individual or combined loading in three loading directions (X, Y, Z), the resilient load-bearing capacity (R_{A}) of the attachment part is exceeded at least in sections, before the maximum load-bearing capacity of a fastening element or all fastening elements (2, 4) is reached.

4. Fastening unit according to one of the preceding claims, **characterised in that** the loading directions also include a third loading direction (Z), which extends vertically to the first (X) and/or second (Y) loading direction and preferably essentially parallel to the axis of the first fastening element (2).

5. Fastening unit according to one of the preceding claims, **characterised in that** the attachment part (10) has at least two passage openings (12, 14), wherein the loading directions have a first loading direction (X), which extends essentially vertically to the axis of the first fastening element (2), and a second loading direction (Y), which extends essentially in the direction in which at least two passage openings (12, 14) are arranged next to one another, and/or essentially vertically to the first loading direction (X).

6. Fastening unit according to one of the preceding claims, **characterised in that** the attachment part (10) has a first section (16) for connecting to the at least one fastening element (2, 4), a second section (18) for connecting to at least one component to be fastened, and a third section (20), which connects the first and the second section, wherein the resilient load-bearing capacity of the third section (20) in at least one loading direction is less than that of the first and/or second section (16, 18).

7. Fastening unit according to claim 6, **characterised in that** the third section (20) has a smaller cross-section than the first and/or second section (16, 18).

8. Fastening unit according to claim 6 or 7, **characterised in that** the third section (20) is formed by several part sections (20', 20").

9. Fastening unit according to one of the preceding claims, **characterised in that** the attachment part (10) consists at least in sections, in particular the third section (20), of a ductile material.

10. Fastening unit according to one of the preceding claims, **characterised in that** the first section (16) of the attachment part (10) has a device (22, 24) for reducing slippage with respect to the at least one fastening element (2, 4).

11. Attachment part (10) for a fastening unit (1) according to one of claims 1 to 10.

12. Connection of a supporting framework section (T) to at least one further supporting framework section or object, comprising a fastening unit (1) according to one of claims 1 to 10, **characterised in that** at least two of the loading directions (X, Y) extend essentially horizontally.

## Revendications

1. Dispositif de fixation (1) pour fixation d'objets à un tronçon d'ouvrage porteur (T) en béton, maçonnerie ou analogue, ou pour liaison de tronçons d'ouvrage porteur (T), sous une sollicitation dynamique, avec
au moins un élément de fixation (2, 4), susceptible d'être ancré dans le tronçon d'ouvrage porteur (T), et
une partie rapportée (10), prévue pour être reliée au tronçon d'ouvrage porteur (T) à l'aide du au moins un élément de fixation (2, 4),
**caractérisé en ce que** la partie rapportée (10) est dimensionnée de manière que, pour chaque fois une sollicitation individuelle ou combinée dans au moins deux directions de sollicitation (X, Y, Z), l'aptitude support (R_{A}) élastique de la partie rapportée est dépassée au moins par degrés avant que l'aptitude support maximale d'un élément de fixation ou de tous les éléments de fixation (2, 4) soit atteinte, les directions de sollicitation présentant une première direction de sollicitation (X), qui s'étend sensiblement perpendiculairement à l'axe du premier élément de fixation (2), et une deuxième direction de sollicitation (Y), qui s'étend sensiblement perpendiculairement à la première direction de sollicitation (X) et/ou à l'axe du premier élément de fixation (2).

2. Dispositif de fixation selon la revendication 1, **caractérisé en ce que** la partie rapportée (10) est dimensionnée de manière que chaque fois, en cas de sollicitation individuelle ou combinée, en au moins deux directions de sollicitation (X, Y, Z), l'aptitude support (R_{A}) élastique de la partie rapportée est dépassée, au moins par degrés, avant que l'aptitude support élastique (R_{A}, R_{Y}, R_{Z}) d'un élément de fixation ou de tous les éléments de fixation (2, 4) soit atteinte.

3. Dispositif de fixation selon la revendication 1 ou 2, **caractérisé en ce que** la partie rapportée (10) est dimensionnée de manière que, en cas de sollicitation chaque fois individuelle ou combinée, dans les trois directions de sollicitation (X, Y, Z), l'aptitude support (R_{A}) élastique de la partie rapportée est dépassée, au moins par degrés, avant que l'aptitude support maximal d'un élément de fixation ou de tous les éléments de fixation (2, 4) soit atteinte.

4. Dispositif de fixation selon l'une des revendications précédentes, **caractérisé en ce que** les directions de sollicitation comprennent en outre une troisième direction de sollicitation (Z), qui s'étend perpendiculairement à la première (X) et/ou à la deuxième (Y) direction de sollicitation et, de préférence, s'étend sensiblement parallèlement à l'axe du premier élément de fixation (2).

5. Dispositif de fixation selon l'une des revendications précédentes, **caractérisé en ce que** la partie rapportée (10) présente au moins deux ouvertures de passage (12, 14), les directions de sollicitation présentant une première direction de sollicitation (X), s'étendant sensiblement perpendiculairement à l'axe du premier élément de fixation (2), et une deuxième direction de sollicitation (Y), s'étendant sensiblement dans la direction dans laquelle sont disposées l'une à côté de l'autre au moins deux ouvertures de passage (12, 14), et/ou s'étendant sensiblement perpendiculairement à la première direction de sollicitation (X).

6. Dispositif de fixation selon l'une des revendications précédentes, **caractérisé en ce que** la partie rapportée (10) présente un premier tronçon (16) pour liaison au au moins un élément de fixation (2, 4), un deuxième tronçon (18) pour liaison au au moins un composant à fixer, et un troisième tronçon (20) reliant le premier et le deuxième tronçon, l'aptitude support élastique du troisième tronçon (20), dans au moins une direction de sollicitation, étant inférieure à celle du premier et/ou du deuxième tronçon (16, 18).

7. Dispositif de fixation selon la revendication 6, **caractérisé en ce que** le troisième tronçon (20) présent une section transversale plus petite que ce que présente le premier et/ou le deuxième tronçon (16, 18).

8. Dispositif de fixation selon la revendication 6 ou 7, **caractérisé en ce que** le troisième tronçon (20) est formé par plusieurs tronçons partiels (20', 20").

9. Dispositif de fixation selon l'une des revendications précédentes, **caractérisé en ce que** la partie rapportée (10) est composée, au moins par tronçons, en particulier le troisième tronçon (20), d'un matériau ductile.

10. Dispositif de fixation selon l'une des revendications précédentes, **caractérisé en ce que** le premier tronçon (16) de la partie rapportée (10) présente un dispositif (22, 24) pour la diminution du glissement par rapport au au moins un élément de fixation (2, 4).

11. Partie rapportée (10) pour un élément de fixation (1) selon l'une des revendications 1 à 10.

12. Liaison d'un tronçon d'ouvrage porteur (T) à au moins un autre tronçon d'ouvrage porteur ou objet, comprenant un dispositif de fixation (1) selon l'une des revendications 1 à 10, **caractérisé en ce qu'**au moins deux des directions de sollicitation (X, Y) s'étendent sensiblement horizontalement.
